# EUROPEAN PATENT APPLICATION

(11) **EP 1 422 060 A1**
(43) Date of publication of application: **26.05.2004**
(21) Application number: 01958577.7
(22) Date of filing: 28.08.2001
(51) Int. Cl.: B32B 33/00

(54) **DECORATION MEMBER AND METHOD FOR PRODUCING THE SAME**

(71) Applicant: MITSUBISHI DENKI KABUSHIKI KAISHA, Tokyo 100-8310 (JP)
(72) Inventor: MAKINO, Katsumi Mitsubishi Denki Kabushiki Kaisha, Tokyo 100-831 (JP); HARAGA, Kosuke Mitsubishi Denki Kabushiki Kaisha, Tokyo 100-8310 (JP); MORI, Akinobu Mitsubishi Denki Kabushiki Kaisha, Tokyo 100-8310 (JP)
(74) Representative: HOFFMANN - EITLE
(86) International application number: PCT/JP2001/007387
(87) International publication number: WO 2003/020520

(57) **Abstract**

According to the method for manufacturing a decorative member, a pattern sheet is prepared by forming a colored pattern portion through printing on a transparent resin sheet using a coloring ink. Then, the pattern sheet is turned upside down, and superimposed on a base member such that the colored pattern portion comes into contact with the surface of the base member. After that, the colored pattern portion is fused to the surface of the base member by pressing the pattern sheet against the base member and heating the colored pattern portion to thereby attach the pattern sheet to the base member.

## Description

### TECHNICAL FIELD

This invention relates to a decorative member such as a decorative metal panel for use in, for example, a cage wall, car door, or landing door of an elevator, and to a method for manufacturing the same.

### BACKGROUND ART

Conventional examples of a decorative metal panel for use in an elevator are disclosed in JP 2000-202976 A and JP 2000-160763 A. In such a decorative metal panel, a colored pattern is printed on an ink receiving layer formed on a thermoplastic resin layer to prepare a film. Then, the thermoplastic resin layer is fused to a metal panel to thereby bond the film to the metal panel. Thereafter, a transparent coating material is applied to the film to form a transparent protective film layer.

In the above-described conventional method for manufacturing a decorative metal panel, in order to protect the colored pattern from damage, wear or the like, it is necessary to further form the protective film layer after bonding the film to the metal panel, resulting in a large number of manufacturing steps and high production cost.

Further, in an elevator, from the viewpoint of fire prevention, it is desirable to reduce the amount of organic material used in the decorative metal panel. However, the protective film layer consists of a transparent coating material or a transparent film, which means an increase in organic material.

### DISCLOSURE OF THE INVENTION

This invention has been made with a view toward solving the above problems in the prior art. It is an object of this invention to obtain a decorative member which helps to reduce the number of manufacturing steps, production costs, and the amount of decorative organic material.

To this end, according to one aspect of the present invention, there is provided a decorative member comprising: a base member; and a pattern sheet which has a transparent resin sheet and a colored pattern portion formed by printing on the transparent resin sheet using a coloring ink and which is attached to the base member by fusing the colored pattern portion to the surface of the base member.

According to another aspect of the present invention, there is provided a method for manufacturing a decorative member, comprising: preparing a pattern sheet by forming a colored pattern portion through printing on a transparent resin sheet using a coloring ink; superimposing the pattern sheet on a base member such that the colored pattern portion comes into contact with the surface of the base member; and fusing the colored pattern portion to the surface of the base member by pressing the pattern sheet against the base member and heating the colored pattern portion to thereby attach the pattern sheet to the base member.

### BRIEF DESCRIPTION OF THE DRAWINGS

Fig. 1 is a sectional view of a decorative metal panel according to Embodiment 1 of this invention;
Fig. 2 is an explanatory diagram illustrating the step of forming a colored pattern portion on the transparent resin sheet of Fig. 1;
Fig. 3 is an explanatory diagram illustrating the step of bonding the pattern sheet of Fig. 2 to a base member;
Fig. 4 is an explanatory diagram illustrating the step of performing a polishing operation on the transparent resin sheet of Fig. 3;
Fig. 5 is a sectional view of a decorative metal panel according to Embodiment 2 of this invention;
Fig. 6 is a sectional view of a decorative metal panel according to Embodiment 3 of this invention; and
Fig. 7 is a sectional view of a decorative metal panel according to Embodiment 4 of this invention.

### BEST MODE FOR CARRYING OUT THE INVENTION

Preferred embodiments of this invention will now be described with reference to the drawings.

### Embodiment 1

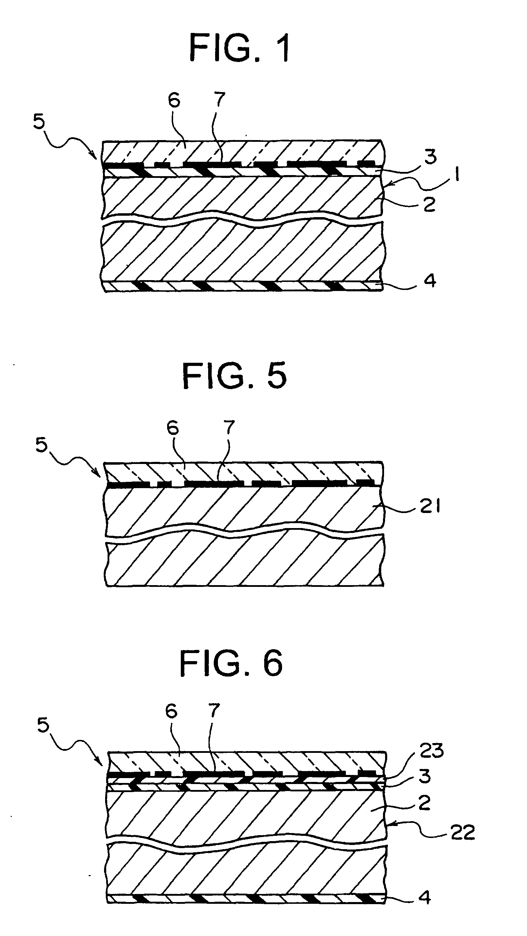

Fig. 1 is a sectional view of a decorative metal panel according to Embodiment 1 of this invention. More specifically, it shows a decorative metal panel for use in a cage wall, car door, or landing door of an elevator.

In the drawing, a base member 1 has a metal plate 2 that is a metal base material, and anticorrosive layers 3 and 4 formed on the obverse and reverse surfaces of the metal plate 2. The metal plate 2 consists, for example, of a steel plate.

A pattern sheet 5 is attached to the anticorrosive layer 3. The pattern sheet 5 has a transparent resin sheet 6 and a colored pattern portion 7 formed on the transparent resin sheet 6 by printing with a coloring ink. The colored pattern portion 7 is fused to the surface of the base member 1, that is, to the anticorrosive layer 3.

Further, the colored pattern portion 7 is partially formed on the transparent resin sheet 6, and the portion of the transparent resin sheet 6 in contact with the anticorrosive layer 3 is fused to the anticorrosive layer 3.

The pattern sheet 5 is attached to the base member 1 by fusing the transparent resin sheet 6 and the colored pattern portion 7 to the anticorrosive layer 3.

The coloring ink used to form the colored pattern portion 7 contains a solvent, a heat fusion material dissolved in the solvent, and a coloring material such as a pigment. The heat fusion material is soluble in the solvent and has hot-melt properties. Examples of the heat fusion material that can be used include ethylene type resin, vinyl acetate type (EVA) resin, polyamide type resin, polyester type resin, polyolefine type resin, thermoplastic rubber, and wax.

Further, the transparent resin sheet 6 is insoluble in the solvent of the coloring ink, and has a melting point higher than that of the heat fusion material. Examples of the material of the transparent resin sheet 6 that can be used include polyester, polyethylene, polypropylene, nylon, polyphenylene sulfide (PPS), and aramid.

Further, it is also possible for the transparent resin sheet 6 to contain an ultraviolet absorber, a light stabilizer, and a color fading restrainer such as a singlet oxygen quencher.

Furthermore, the transparent resin sheet 6 may be formed in a multilayer structure by superimposing one upon the other a plurality of layers consisting of different materials. In this case, it is advantageous from the production viewpoint for the melting temperature of the print-surface-side layer of the colored pattern portion 7 to be lower than the temperature of the layer on the opposite side.

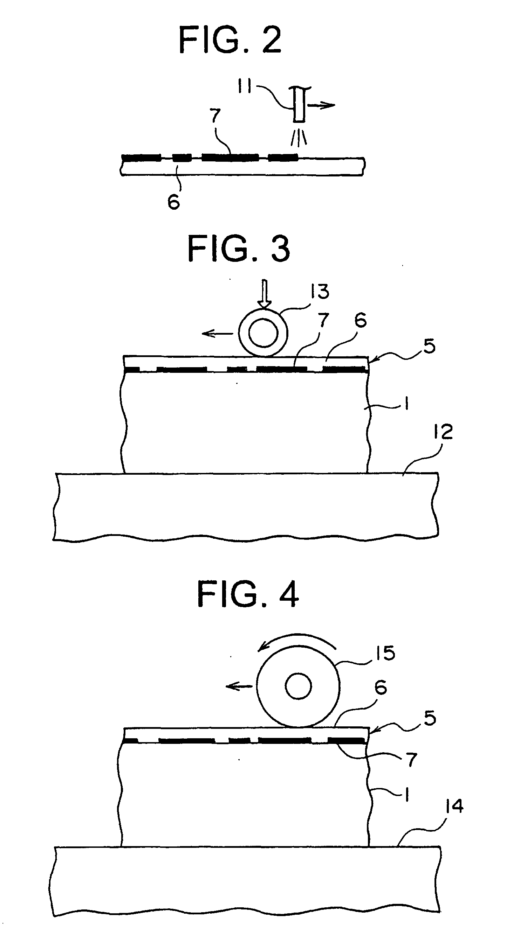

Next, a method for manufacturing the decorative metal panel will be described. First, as shown in Fig. 2, by using a printer having a nozzle 11 adapted to eject coloring ink, the colored pattern portion 7 is printed on the transparent resin sheet 6. The colored pattern portion 7 is dried after printing, whereby the pattern sheet 5 is prepared. The position of the nozzle 11, the moving speed thereof, the color and amount of the coloring ink, etc. are controlled by a computer (not shown) connected to the printer.

Since it is to be seen from the side of the transparent resin sheet 6 which is opposite to the print surface, the pattern printed on the colored pattern portion 7 is reversed.

Thereafter, the pattern sheet 5 is turned upside down, and superimposed on the base member 1 so that the colored pattern portion 7 may come into contact with the surface of the base member 1. Then, as shown in Fig. 3, the base member 1 is placed on a pressurizing bed 12, and the transparent resin sheet 6 and the colored pattern portion 7 are heated while pressing the pattern sheet 5 against the base member 1 by a pressurizing-heating roller 13. As a result, the transparent resin sheet 6 and the colored pattern portion 7 are fused to the surface of the base member 1, and the pattern sheet 5 is attached to the base member 1.

Next, as shown in Fig. 4, the base member 1, to which the pattern sheet 5 has been attached, is placed on a workbench 14, and the surface of the transparent resin sheet 6 on the side opposite to the surface with the colored pattern portion 7 is polished by a polishing roller 15. While the polishing may be performed simply to flatten the surface, it is possible to impart gloss to the surface of the decorative metal panel by putting, for example, a mirror finish thereon.

In this decorative metal panel, the pattern sheet 5 is attached to the base member 1 by fusing the transparent resin sheet 6 and the colored pattern portion 7 themselves to the base member 1, so that the colored pattern portion 7 is protected by the transparent resin sheet 6, and there is no need to form a further protective film on the pattern sheet 5. Thus, the number of manufacturing steps is reduced, and it is possible to achieve a reduction in cost even in the case of multikind and small quantity production. Further, it is possible to reduce the amount of the organic material.

Further, by reducing the amount of the organic material, it is possible to achieve an improvement in fire prevention properties and to avoid a profligate use of resources. In particular, in a panel for use in an elevator, it is desirable to reduce the organic material in order to secure fire prevention properties. Thus, the present invention is effectively applicable to such a panel.

While in the above-described example the surface of the transparent resin sheet 6 is polished, it is also possible, for example, to perform embossing thereon by using an embossing drum.

Further, while in the above example the colored pattern portion 7 is partially provided on the transparent resin sheet 6, it is also possible to provide the pattern over the entire surface of the transparent resin sheet.

Further, the colored pattern portion 7 may be monochrome or multicolored.

### Embodiment 2

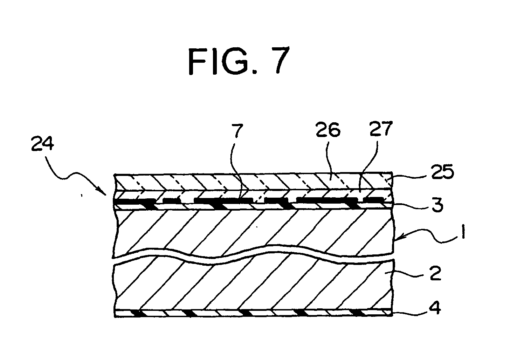

Next, Fig. 5 is a sectional view of a decorative metal panel according to Embodiment 2 of this invention. In the drawing, a base member 21 consists solely of a metal plate that is a metal base material. The metal plate consists of a material that needs no rustproof coating such as stainless steel or anodized aluminum. A coating sheet 5 is attached to the surface of the base member 21 by fusing the transparent resin sheet 6 and the colored pattern portion 7 thereto.

In this decorative metal panel, the base material of the metal plate constituting the base member 21 is visible through the clearances of the colored pattern portion 7 or through the colored pattern portion 7 itself, whereby it is possible to obtain a design full of the feel of metal and depth.

It is also possible to perform a polishing operation, such as by hairline processing or mirror finishing, on the surface of the metal plate constituting the base member 21. Through a combination of such polishing operations and the colored pattern portion 7, it is possible to obtain a unique design.

### Embodiment 3

Next, Fig. 6 is a sectional view of a decorative metal panel according to Embodiment 3 of this invention. In the drawing, a base member 22 has the metal plate 2, the anticorrosive layers 3 and 4 formed on the obverse and reverse surfaces of the metal plate 2, and a colored primer layer 23 formed on the anticorrosive layer 3. The colored primer layer 23 is formed by applying, for example, a white or a metallic coating material. A coating sheet 5 is attached to the surface of the colored primer layer 23 by fusing the transparent resin sheet 6 and the colored pattern portion 7 thereto.

In this decorative metal panel, it is possible to achieve an improvement in terms of artistic design through a combination of the primer color of the colored primer layer 23 and the colored pattern portion 7.

For example, when the primer color is white, it is possible to make the color of the colored pattern portion 7 appear vivid. When the primer color is metallic, it is possible to make the metallic color visible where no colored pattern portion 7 is formed or to make the metallic color visible through the colored pattern portion 7, thereby providing a unique feeling.

It is not necessary for the color of the colored primer layer 23 to be the same over the entire surface of the base member 22. It is also possible to combine different primer colors.

### Embodiment 4

Next, Fig. 7 is a sectional view of a decorative metal panel according to Embodiment 4 of this invention. In the drawing, a pattern sheet 24 has a transparent resin sheet 25 and the colored pattern portion 7 formed through printing on the transparent resin sheet 25 using a coloring ink. The colored pattern portion 7 is fused to the anticorrosive layer 3.

The transparent resin sheet 25 has a sheet base material 26 and an ink receiving layer 27 which is formed on the sheet base material 26 and on which printing is performed using a coloring ink. The ink receiving layer 27 prevents the coloring ink from running or spreading.

The ink receiving layer 27 is not adhesive enough on the anticorrosive layer 3, so that it is desirable for the colored pattern portion 7 to be formed on the entire surface or most of the surface of the pattern sheet 24.

In this decorative metal panel, the colored pattern portion 7 is formed through printing on the ink receiving layer 27 using a coloring ink, so that it is possible to print a clear pattern of high resolution.

While in Embodiments 1 through 4 the decorative member consists of a decorative metal panel, the decorative member is not restricted to one in the form of a panel. Further, the base material of the base member is not restricted to metal.

## Claims

1. A decorative member comprising:
a base member; and
a pattern sheet which has a transparent resin sheet and a colored pattern portion formed by printing on the transparent resin sheet using a coloring ink and which is attached to the base member by fusing the colored pattern portion to the surface of the base member.

2. A decorative member according to claim 1, wherein the base member has a base material consisting of metal.

3. A decorative member according to claim 2, wherein the base member further includes a anticorrosive layer formed on the surface of the base material.

4. A decorative member according to claim 3, wherein the base member further includes a colored primer layer formed on the surface of the anticorrosive layer.

5. A decorative member according to claim 2, wherein the pattern sheet is directly attached to the surface of the basematerial.

6. A decorative member according to claim 1, wherein the colored pattern portion is partially formed on the transparent resin sheet, and wherein the portion of the transparent resin sheet which is in contact with the base member is fused to the base member.

7. A decorative member according to claim 1, wherein the transparent resin sheet has a sheet base material and an ink receiving layer which is formed on the sheet base material and on which printing is performed using the coloring ink.

8. A decorative member according to claim 1, wherein the coloring ink contains a solvent, a heat fusion material dissolved therein which is soluble and thermally meltable in the solvent, and a coloring material, and wherein the transparent resin sheet is insoluble in the solvent and has a melting point higher than that of the heat fusion material.

9. A method for manufacturing a decorative member, comprising:
preparing a pattern sheet by forming a colored pattern portion through printing on a transparent resin sheet using a coloring ink;
superimposing the pattern sheet on a base member such that the colored pattern portion comes into contact with the surface of the base member; and
fusing the colored pattern portion to the surface of the base member by pressing the pattern sheet against the base member and heating the colored pattern portion to thereby attach the pattern sheet to the base member.

10. A method for manufacturing a decorative member according to claim 9, further comprising: polishing the surface of the transparent resin sheet on the side opposite to the surface on which the colored pattern portion is formed, after attaching the pattern sheet to the base member.
